# EUROPEAN PATENT APPLICATION

(11) **EP 1 156 691 A1**
(43) Date of publication of application: **21.11.2001**
(21) Application number: 00110493.4
(22) Date of filing: 17.05.2000
(51) Int. Cl.: H04Q 7/38

(54) **Method and devices for the location update in a mobile communication system**

(71) Applicant: TELEFONAKTIEBOLAGET LM ERICSSON (publ), 126 25 Stockholm (SE)
(72) Inventor: Bruss, Jörg, 52066 Aachen (DE); Keutmann, Heinz-Peter, 52249 Eschweiler (DE); Kobriger, Peter, 52072 Aachen (DE)
(74) Representative: Tonscheidt, Andreas

(57) **Abstract**

In a mobile communication system, a home location register comprises a record for a subscriber and an identification of a visitor location register serving said subscriber. Visitor location registers serve a subscriber according to the present location of equipment attributed to the subscriber and store parameters from the record for the subscriber served. Parameters from the subscriber records can be copied between different location registers. In a method for the location update of a subscriber, a present visitor location register (VLn) detects the presence of subscriber equipment (SE) requiring service. The present visitor location register (VLn) sends a location update message (23) for the subscriber to the home location register (HL) and is provided with an identification of a previous visitor location register (VLp) of the subscriber. Then, the present visitor location register (VLn) requests subscriber data from the previous visitor location register (VLp) and the previous visitor location register (VLp) sends subscriber data to the present visitor location register (VLn). Location registers and computer programs adapted to the method are also described.

## Description

### Technical field of the invention

The present invention relates to a method according to the preamble of claim 1. Furthermore, devices and programs for performing a location update are described.

### Background

Mobile communication systems provide wireless connections with user equipment, e.g. mobile phones, which are generally attributed to a specific subscriber. Subscriber data is stored in a database denoted as home location register (HLR), a subscriber record including, for example, the services and connection parameters to which a user has subscribed. Parameters from the subscriber record are requested by control nodes in the system when processing the establishment of a connection to or from the equipment of the subscriber, for example a data connection, a speech call, an SMS (Short Message Service) message or an access of a supplementary service like initiating a call forwarding to a different subscriber number.

To reduce the signaling load during the establishment of a connection and the computational load of the home location register, most communication systems comprise also visitor location registers (VLR). A VLR serves subscribers in specific locations, usually subscribers whose equipment is located in a limited part of the area covered by the communication system, by providing parameters for processing their connections to control nodes in the system. For this purpose, parameters from the subscriber record in the HLR are copied to the VLR presently serving the subscriber and stored in it. It is customary that a VLR is collocated or integrated with a control node processing connections for the same subscribers as those served by the visitor location register, e.g. a mobile switching center (MSC). A VLR can also be embodied as a function unit in the node. In these cases, messages sent to and from the VLR are often relayed and unpacked by the control node. Alternatively, a visitor location register can be a separate device with units to perform the database management and communication with other nodes and devices in the communication system.

Generally, every subscriber has a unique home location register which can be identified from his subscriber number while the visitor location register serving the subscriber is preferably located close to his position. Subscriber equipment which detects that it has entered a different service area of network, e.g. a different cell, a different location area or the service area of a different node in the communication system, sends a location update request which is forwarded to the visitor location register serving the respective area. If subscriber equipment moves from the service area of a previous VLR to the service area of a present VLR, the present visitor location register detects from the location update request that subscriber equipment has entered its service area and sends a location update message to the HLR of the subscriber. The location update message comprises the identities of the subscriber and the present VLR. The identity of the present VLR is stored in the subscriber record for allowing to locate the subscriber equipment in the service area of the communication system and route subscriber terminating connections to his location.

In reply to a location update message, the home location register sends subscriber data to the present VLR to provide it with the information necessary to process connections. The data is sent with messages which allow to copy parameters from the subscriber record in the home location register to the memory of the VLR. According to GSM (Global System for Mobile Communications) and UMTS (Universal Mobile Telecommunication System) specifications (GSM specification 09.02 and 3G Technical Specification 29.002, V3.3.1; 3^{rd} Generation Partnership Project), subscriber data is transmitted to the VLR with one or several MAP (Mobil Application Part) messages "Insert Subscriber Data" sent by the HLR in response to the message "Update Location" from the present VLR which provides the HLR with the identity of the present VLR. Finally, the HLR sends a message to the present VLR which confirms the location update. The HLR also sends a message to the previous VLR to delete the data for the subscriber from its memory.

When a subscriber accesses a communication system, generally an authentication procedure is performed to check whether he is authorized to establish a connection. For this purpose, authentication parameters are transferred to the present VLR. Authentication parameters can be provided by the HLR of the subscriber or they can be transmitted from a previous VLR of the subscriber as described in 3G Technical Specification 33.102 Version 3.3.1. To allow the transfer of authentication parameters, an interface between different visitor location registers is defined which is denoted G-interface in the above-mentioned specifications GSM 09.02 and 3G TS 29.002.

Although different subscriber records can be located in different home location registers, the number of home location registers is small compared to a plurality of visitor location registers in most communication systems. Consequently, the processing load for location updates is high for a home location register when many visitor location registers request simultaneous location update procedures. The acceptable processing load limits the number of subscribers who can be managed by a home location register. It has been proposed to reduce the load by omitting the message to delete the subscriber data from the previous VLR (3G Technical Specification 23.116 Version 1.0.0). In this case, subscriber data can be reused without a further transfer from the HLR when a subscriber returns to a previous VLR which is a frequent scenario for commuting subscribers. However, the presence of subscriber data in several visitor location registers of the communication system requires an increased storage capacity and a complex data management to avoid an excessive growth of the databases. Furthermore, the consistency of the subscriber records has to be guaranteed, especially when the master record in the HLR is updated.

If a communication system comprises networks of different operators from different countries, it is common that the home location register of a subscriber is located in a different network, e.g. when he is traveling or due to limited coverage. In this case, the location update procedure requires long distance signaling between a VLR and the HLR in the different network. Long distance signaling is comparatively slow and prone to disturbances, especially between countries located far from each other. Therefore, loss of subscriber data or, especially if retransmissions of corrupted data are necessary, a time-out can occur. Opposed to high costs for long distance signaling, a location update often provides no benefits for an operator, especially if no connection is established while the subscriber equipment is located in the service area of a VLR.

### Summary and description of the invention

It is an object of the present invention to obviate these disadvantages and reduce the processing load in the HLR for location update procedures. It is a further object, to reduce the long distance signaling for the location update of roaming subscribers. It is still another object to propose a location update procedure which can easily be implemented.

According to the invention, the method described in claim 1 is performed. Furthermore, the invention is embodied in devices and software programs as described in claims 14, 23, 27 and 28. Advantageous embodiments are described in the dependent claims.

A basic idea in the proposed method is to provide subscriber data to a present visitor location register from a previous visitor location register. The proposed method is initiated when a VLR detects the presence of subscriber equipment requiring service. The service area of a VLR can be entered for example by moving subscriber equipment into it or by switching on subscriber equipment which is already located in the respective area. Customary subscriber equipment sends location update requests for example when it is switched on or when it enters a different location area. The location update request to the VLR can be used to detect the presence.

When the present VLR detects subscriber equipment, it sends a location update message for the subscriber to whom the equipment is attributed to the HLR. As a VLR often serves different location areas or subscriber equipment may have been switched off for a short period and may not be purged from the memory of the VLR, a location update message is not necessary for every location update request. Therefore, a location update message indicating a subscriber who entered the service area is preferably only sent for subscribers who are not registered in the memory of a VLR or who are registered with an indication that they are not served anymore. Preferably, the VLR performs a corresponding check before sending a location update message which indicates that a subscriber has entered the service area. Other types of location update which are common in communication systems, e.g. a periodic location update, can be performed without a corresponding check.

The present VLR is provided with an identification of the previous VLR of the subscriber. As the previous VLR is identified in the subscriber record in the HLR, the identification is preferably sent in return to the location update message. It is proposed, that the identification stored in the HLR and provided to the VLR is the address of the previous VLR to simplify the method. Alternatively, the previous VLR can be identified from the location update request of the subscriber equipment which generally comprises an identifier of the previous location area of the equipment. If a previous VLR can not be identified, e.g. because the subscriber record has been purged, a customary location update is performed as in the state of the art, wherein subscriber data is sent from the HLR to the present VLR.

In a next step, the present VLR requests subscriber data from the previous VLR. For this purpose, a corresponding message is sent which comprises the identity of the subscriber for whom the location update is performed. In GSM or UMTS systems, the message is sent over the G-interface between the visitor location registers. In response to the message, the previous VLR sends subscriber data to the present VLR. Preferably, the successful execution of the data transfer is confirmed.

The proposed method reduces the signaling between an HLR and the visitor location registers because the subscriber record is not sent by the HLR for most location updates. The HLR still is the master database for the subscriber records. It is, however, only necessary to send data from the HLR of the subscriber if a previous VLR cannot be identified or if data in the previous VLR is missing or unreliable, for example after a restart of the previous VLR, after the first attach of a subscriber to the communication system or after a subscriber record is purged in the previous VLR. Consequently, the processing load for location updates is considerably reduced in the HLR. The corresponding increase in the processing load of the visitor location registers is acceptable because it is distributed over a plurality of devices. For subscribers roaming in a different network, the long distance signaling between the VLR and HLR is replaced for the proposed location update by short distance signaling between visitor location registers which are generally adjacent and part of the same network. This reduces the costs for the operator considerably, improves the reliability of the data transmissions and accelerates them. Finally, the method can easily be implemented and allows a simple database management if a location cancellation is performed in the previous VLR.

In a preferable embodiment of the method, the HLR sends parameters from the subscriber record to the present VLR if the present VLR is not adapted to request and receive subscriber data from the previous VLR or if the previous VLR is not adapted to transmit subscriber data to the present VLR. The HLR performs a corresponding check and can store a list of the capabilities of visitor location registers for this purpose. More preferably, the subscriber record is amended by a parameter whether the previous VLR is adapted to the method as this alternative is easily implemented. In either embodiment, some nodes in the communication system or in a network within the system can perform the proposed method while other nodes are not adapted to it. Consequently, it is not necessary to update all nodes simultaneously to perform the method.

In an advantageous embodiment, the HLR provides the identification of the previous VLR. Often a communication system will comprise both visitor location registers which are adapted and which are not adapted to the proposed method. If a present VLR is provided with an identification of a previous VLR, this preferably indicates that it can obtain subscriber data from said VLR. If the previous VLR is identified in another way, e.g. from a location area identifier, it is also possible that the present VLR comprises or can access a list with capabilities of other visitor location registers to check whether they are adapted to the proposed method. In a further alternative, a present VLR always tries to obtain parameters from the previous VLR and requests subscriber data from the HLR if the transfer from the previous VLR fails.

If the HLR sends an identification of the previous VLR, it is proposed to include it in a confirmation of the location update procedure by the HLR. Consequently, the dialogue between the HLR and the present VLR can be limited to the location update message and the confirmation. In the state of the art, the transfer of subscriber data is embedded between location update message and confirmation. Therefore, a VLR can easily distinguish the different location update procedures by checking whether subscriber data or a confirmation is received in reply to a location update message.

In an advantageous embodiment of the method, the previous VLR deletes the data corresponding to the subscriber after having sent it to the present VLR. In this way, the data management in the communication system is simplified as only one copy of the data record for a specific subscriber exists in a VLR. Data can be deleted after sending it to the present VLR, or preferably, after the reception is confirmed by the present VLR. In an alternative embodiment, a copy of the subscriber data is kept in the previous VLR, i.e. the data is not deleted after being sent. This allows to adapt the method in a flexible way to the subscriber behavior, e.g. if a high percentage of commuting subscribers is present. To avoid an excessive growth of subscriber data in the visitor location registers, the latter alternative requires a more complex data management as it is for example proposed in 3G Technical Specification 23.116. For example subscriber data is removed from a VLR if the subscriber is inactive for an extended period of time or if the storing capacity of the VLR is approached.

It is proposed, that the present VLR sends a message to the previous VLR to delete subscriber data, i.e. a cancel location message. In this way, the record can also be deleted when no successful transmission to the present VLR could be achieved, e.g. due to a disrupted connection. This simplifies the database management, especially if the subscriber record has to be updated.

An advantageous VLR sends an indicator to the HLR that it is adapted to receive subscriber data from a previous VLR and provide data to a further VLR. In principle a VLR can have only one of these capabilities and correspondingly different indicators can be used. Preferably, however, the VLR has both capabilities represented by a single indicator. If a VLR indicates that it is adapted to receive subscriber data from a previous VLR, the HLR preferably does not send subscriber data to the VLR. Instead, it can for example reply to a location update message with a confirmation including the identification of a previous VLR. It is proposed that the present VLR accepts in response to a location update message both subscriber data and a message indicating a previous VLR because an HLR may not evaluate the indicator. The information from the indicator whether the VLR can provide data to a further VLR is stored, e.g. in a parameter of the subscriber record. In a subsequent location update, the HLR checks whether said VLR which is now the previous VLR can provide subscriber data. The HLR provides the data if this is not the case. If no corresponding information is present in the HLR, e.g. for an initial location update, the parameters from the subscriber record are also provided by the HLR.

Preferably, the indicator is included in the location update message to minimize the number of messages in a location update. The indicator should be an optional parameter in a message to avoid difficulties if a location register is not adapted to the proposed method.

Visitor location registers and the control nodes which are provided with parameters by a VLR can support different services and require therefore different parameters from the subscriber record. To simplify the proposed method, it is proposed that the present visitor location register stores all parameters received from an HLR or a previous VLR. Especially, parameters corresponding to services which are not supported by the present visitor location register are preferably not rejected but stored. In this way, a subscriber record with all required parameters can be provided to any further VLR in a subsequent location update.

If the present visitor location register rejects parameters from received subscriber data, it preferably stores a list of the rejected parameters or an indication that parameters are absent. In an advantageous method, the present VLR transmits the list or indication in reply to a request for subscriber data by a further visitor location register in a subsequent location update in addition to the stored subscriber data. The further VLR can then check whether parameters are absent in the transmitted subscriber data. Alternatively, the corresponding information is sent to the HLR for storing it. The information can then be sent in reply to the location update message from the next VLR requesting a location update for the respective subscriber.

An advantageous visitor location register checks the contents of received subscriber data and reports unsupported services to the previous visitor location register. When the previous VLR receives the report that a service is not supported by the present VLR, the previous VLR preferably checks whether the same or similar results can be achieved by a different service. If this is the case, the previous VLR determines and transmits replacement parameters for the unsupported service wherein the replacement parameters correspond to the different service. For this purpose, a message sequence for inserting subscriber data is preferably embedded into the message sequence to request subscriber data, i.e. in reply to the request for subscriber data, one or several messages are sent from the previous VLR to insert the data and only after the confirmations for the messages to insert data are received from the present VLR, a confirmation message for the request is sent by the previous VLR. In this way, the previous VLR receives for every message to insert subscriber data a confirmation message with information whether services are unknown to the present VLR. To avoid difficulties when transferring the subscriber data to a further VLR which again supports the service unsupported by the present VLR, the replacement parameters are preferably identified as such by the previous VLR, e.g. by a corresponding bit in the data set. If a further VLR detects parameters identified as replacement parameters, it can contact the HLR to obtain the original parameters for the replaced service and the replacement service.

While the HLR is generally not provided with an information that the transfer of a subscriber record between visitor location registers has failed or was incomplete, the present VLR often has a corresponding indication. For example a message that parameters are absent can be received from the previous VLR or a transmission error is detected. It is proposed that the present visitor location register requests parameters from the home location register when it has an indication that subscriber data is absent or may be corrupted. Missing parameters from the subscriber record are preferably requested from the HLR. If data is missing or corrupted due to a transmission problem between the present and the previous VLR, it is either possible to request a retransmission from the previous VLR or to end the dialogue with the previous VLR and request the data from the HLR. The preferable option in this case depends on the operating conditions and architecture of the communication system.

Whether a received subscriber record is incomplete depends on the parameters needed for the services supported by the VLR. Therefore, an advantageous visitor location register selects which parameters are requested from the home location register and includes a list of the selected parameters in the request. It is possible that a VLR requests a complete subscriber record from the HLR, all absent parameters or only those parameters which are missing. Preferably, parameters are only considered as missing if they are both absent and the present VLR supports the corresponding service.

Location registers for mobile communication systems comprise a memory or data base with subscriber related parameters and a processing system for accessing and managing the contents of the memory. The location register can be embodied as part of a node in the communication system or as stand-alone device. All procedures executed by a VLR or an HLR as described below can be executed by function units in the respective location register. Preferably, the units are embodied as software units which are executed in the processing system of the location register.

A visitor location register for a mobile communication system has interfaces to receive messages from subscriber equipment and to exchange messages with a further visitor location register and with a home location register comprising a record for the subscriber to whom the equipment is attributed. Generally, the messages sent over the interfaces are relayed by other nodes in the system. Parameters from the subscriber record can be copied by the messages. When the processing system of the VLR detects the presence of a subscriber equipment from a location update request, it sends a location update message for the subscriber to the home location register unless he is already served by the VLR. Parameters from the subscriber record received in reply to the location update message are stored in the memory.

Parameters from the subscriber record are sent by a home location register according to the invention only in some cases in reply to a location update message. If the home location register does not send subscriber data, the processing system of the proposed VLR obtains an identification of the previous visitor location register of the subscriber equipment. It then sends a message for requesting subscriber data from the previous visitor location register and stores subscriber data received in a reply from the previous visitor location register. In a GSM or UMTS communication system, the G-interface is suitable to exchange the messages between the visitor location registers.

Preferably, the processing system obtains the identification of the previous visitor location register from a message by the home location register. It is proposed that the identification is included in a confirmation of the location update from the HLR.

In an advantageous embodiment, the processing system sends a message to the previous visitor location register to delete subscriber data. Alternatively, the message can be omitted if the previous VLR is provided with a database management unit which ensures sufficient storing capacity for subscriber data which is received in reply to location update requests.

A preferable VLR sends an indicator to the home location register that it is adapted to provide subscriber data to a further visitor location register and/or request subscriber data from a previous visitor location register. Regardless of the setting of the indicator, the VLR is preferably adapted to accept both subscriber data and an indication to perform the proposed method in response to the message comprising the indicator. As the HLR may not be adapted to evaluate the indicator either case can occur. The indicator can be included in a new message which is defined for this purpose or in the location update message, preferably as an optional parameter. It is possible to define a new location update message or a new location update context for this purpose. If the HLR rejects the message or the context as unknown, the VLR can use the rejection as an indicator that the HLR is not adapted to the proposed location update and send a customary location update message.

The processing system of a visitor location register can check the contents of a received subscriber record whether it comprises parameters corresponding to services which are not supported, i.e. unknown. An advantageous processing system sends a confirmation message which reports unsupported services to the previous visitor location register. The previous VLR can then determine replacement parameters for the reported services and send them to the present VLR. Preferably, a message sequence for inserting subscriber data is embedded into the message sequence to request subscriber data for this purpose. To avoid difficulties when transferring the subscriber data to a further VLR which again supports the service unsupported by the present VLR, the replacement parameters are preferably identified as such, e.g. by a corresponding bit in the subscriber data. If a further VLR detects that parameters are replacement parameters, it can then contact the HLR to obtain the original parameters for the replaced service and the replacement service if it supports the replaced service and the parameters are absent.

Subscriber records in different visitor location registers can contain different subsets of data from the master record in the HLR. If a processing system in a VLR rejects parameters from a received subscriber record and does not store them, it preferably stores a list of the absent parameters. An advantageous VLR sends both the data and the list in reply to a request for subscriber data by a subsequent visitor location register. Alternatively, an indication that parameters are absent can be sent. In this way, incomplete subscriber data can be identified by checking the list or indicator. It is proposed that the list of absent parameters is stored by any subsequent VLR and updated when further parameters are deleted from the subscriber record in a further data transfer or when parameters are sent from the HLR to a VLR.

It is proposed that the processing system requests parameters absent in the subscriber record from the home location register. For this purpose, the processing system evaluates an indication that a subscriber record is incomplete or corrupted, for example a list of absent parameters provided by a previous VLR. Even if a VLR requests some parameters of a subscriber record from a previous VLR and other parameters from the HLR, the total signaling load in the communication system is generally reduced because subscriber records are normally split up and sent in several messages due to their size.

An advantageous processing system selects parameters which are requested from the home location register. Preferably, the VLR checks whether absent parameters are necessary for processing connections of the subscriber and requests only parameters for supported services, especially if the previous and the present VLR store the same subset of the subscriber record.

The messaging sequences between a present and a previous visitor location register are significantly simplified if the processing system stores parameters corresponding to services which are not supported. As a result, the contents of the subscriber record are independent of the services supported by the visitor location registers.

A home location register for a mobile communication system has a processing system and a memory for storing subscriber records and an identification of a visitor location register presently serving the subscriber. The processing system identifies the visitor location register presently serving the subscriber from a location update message and stores the identity. An interface allows to exchange messages with visitor location registers, wherein the messages are generally relayed by further nodes in the communication system.

According to the invention, the processing system of the HLR checks whether both the previous visitor location register of the subscriber and the present visitor location register which sent the location update message are adapted to exchange subscriber data with a visitor location register. The processing system of the HLR sends an identification of the previous visitor location register over the interface to the present visitor location register if the check is positive, i.e. if both are adapted to exchange subscriber data. Else the HLR sends subscriber data to the present visitor location register. Alternatively or in addition to the identification, a first indicator can be sent that subscriber data is obtainable from the previous visitor location register.

Preferably, the home location register sends the identification or the first indicator or both in a confirmation of the location update message which ends the messaging sequence with the visitor location register.

It is proposed, that the processing system of the HLR checks the location update message for a further indicator whether the visitor location register sending the message is adapted to exchange subscriber data with a visitor location register.

An advantageous home location register stores a parameter indicating whether a visitor location register can exchange subscriber data with a further visitor location register. Preferably the parameter is stored in the subscriber record.

A program unit according to the invention can be stored on a data carrier or is loadable into a visitor location register for a mobile communication system. The VLR has a processing system for executing the program unit, a memory and interfaces to receive messages from equipment attributed to a subscriber and to exchange messages with a further visitor location register and with a home location register comprising a subscriber record for the subscriber. The proposed program unit detects the presence of a subscriber equipment from a location update request, initiates a location update message for the subscriber equipment to the home location register and stores subscriber data received in reply to the location update message in the memory. Unless the parameters are sent by the HLR, the program unit obtains an identification of the previous visitor location register of the subscriber equipment, initiates a message for requesting subscriber data from the previous visitor location register and stores subscriber data received from the previous visitor location register.

A further program unit can be stored on a data carrier or loadable into a home location register for a mobile communication system. The HLR has a memory for storing subscriber records and an identification of a visitor location register serving a subscriber, a processing system for executing the program unit and an interface to exchange messages with visitor location registers. The program unit identifies the visitor location register serving a subscriber from a location update message and stores the identity. According to the invention, the program unit checks whether both the previous visitor location register serving the subscriber and the present visitor location register which sent the location update message are adapted to exchange subscriber data with a visitor location register. The program unit initiates the transmission of an identification of the previous visitor location register to the present visitor location register if the check is positive, i.e. if both are adapted to exchange subscriber data. Else the unit initiates the transmission of subscriber data to the present visitor location register. Alternatively or in addition to the identification, an indicator can be sent that subscriber data is obtainable from the previous visitor location register.

The described program units can perform any steps of the above methods which relate to the respective location register.

The foregoing and other objects, features and advantages of the present invention will become more apparent in the following detailed description of preferred embodiments as illustrated in the accompanying drawings.

### Brief description of the drawings

- Fig. 1: shows a location update procedure in the state of the art
- Fig. 2: shows a location update procedure according to the invention
- Fig. 3: shows a flow chart of a procedure executed in a visitor location register for requesting parameters
- Fig. 4: shows a procedure executed in a visitor location register for providing parameters to a further visitor location register
- Fig. 5: shows a flow chart of a method executed in a home location register according to the invention
- Fig. 6: shows a messaging sequence between visitor location registers
- Fig. 7: shows a location register

### Detailed description of preferred embodiments

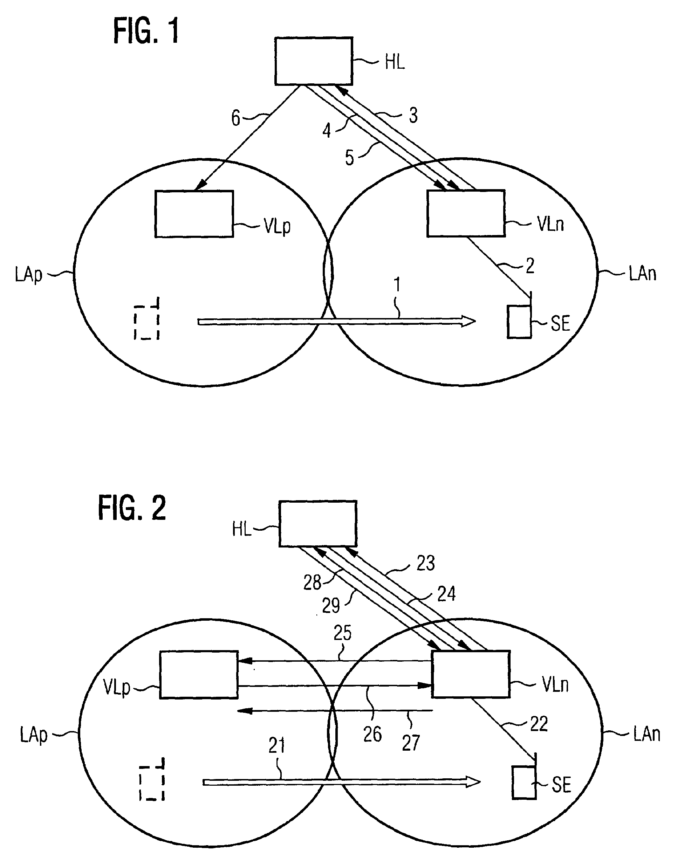

In figure 1, a location update procedure in a communication system in the state of the art is depicted. As indicated by arrow 1, subscriber equipment SE, e.g. a mobile phone or another mobile terminal, can move from a previous location area LAp which is served by a previous visitor location register VLp to a present location area LAn served by a present visitor location register VLn. In customary systems according to GSM or UMTS specifications, the visitor location registers VLp, VLn are integrated with control nodes, e.g. MSCs, processing connections for subscribers in the respective location areas LAp, LAn.

To simplify the drawings, only the originating and terminating devices of messages are shown. A skilled person is aware that messages will generally be relayed by several further nodes. For example, a message from subscriber equipment is generally received by a base station which provides wireless connections to the subscriber equipment and which is in tum connected to a controller providing connections to a control node in the communication system.

When subscriber equipment SE detects that it has entered a different location area LAn, it sends a location update request 2 to the visitor location register VLn serving the present location area LAn. If the visitor location register is integrated with a control node, the latter generally receives the request 2 and forwards it. When the visitor location register VLn receives a location update request 2 from a subscriber equipment without a corresponding subscriber record in its memory, i.e. when the visitor location register detects the presence of new subscriber equipment, it sends a location update message 3 to the home location register HL in which the subscriber is registered. The home location register HL can be identified from an identification of the subscriber in the location update request 2. The location update message 3 comprises the identity of the subscriber and the identity of the present visitor location register VLn. The latter is stored in the subscriber record in the home location register HL for the routing of subscriber terminating connections.

Parameters from the subscriber record are sent to present the visitor location register VLn in one or several messages 4 in reply to the location update message 3. In this way, the present visitor location register VLn is provided with data necessary to process connections for the subscriber equipment. The messaging sequence between visitor location register and home location register is ended with a confirmation message 5 indicating the successful location update to the present visitor location register VLn.

Furthermore, the home location register sends a cancel location message 6 with an identification of the subscriber equipment SE to the previous visitor location register VLp after it has received the location update message 3. Cancel location message 6 indicates that subscriber data for the subscriber equipment SE can be deleted to avoid an excessive growth of the databases in the visitor location registers.

In a method according to the invention the location update procedure is performed as shown in figure 2. Again, subscriber equipment SE moves from a previous location area LAp to a present location area LAn as indicated by arrow 21. After detecting that it has moved to a different location area, the subscriber equipment SE sends a customary location update request 22 to the visitor location register VLn serving the respective location area LAn.

Subsequently, a location update message 23 is sent to the home location register of the subscriber equipment if a location update is necessary. The location update message 23 comprises the identities of the subscriber equipment and the present visitor location register VLn which is stored in the subscriber record in the home location register. Location update message 23 also includes an indicator that a location update procedure according to the invention is possible, i.e. that the present visitor location register VLn can obtain subscriber data from a previous visitor location register and provide it to a further one. Accordingly, the home location register checks the location update message 23 whether any indicator is present and whether it indicates the applicability of the proposed method. This information can be stored in a list of visitor location registers maintained in the home location register or as a parameter in the subscriber record which is updated with the reception of any location update message for the subscriber.

From an indicator stored for the previous visitor location register VLp of the subscriber and the indicator sent by the present visitor location register VLn in the location update message, the home location register HL checks if both visitor location registers are adapted to perform the proposed location update method. If a visitor location registers does not support the proposed method, a location update as known in the state of the art and described with respect to figure 1 is performed. The latter location update procedure can also be executed if the visitor location registers differ in the services which they support and store different subsets of the parameters from the subscriber record, if it is detected that a subscriber record is damaged or if the record in the home location register has changed.

If both visitor location registers and the home location register support the proposed location update, the home location register stores the identity of the present visitor location register VLn and returns a confirmation 24 of the successful location update without parameters from the subscriber record. Preferably, the confirmation 24 comprises the address of the previous visitor location register VLp or an indicator that subscriber data can be obtained from the previous visitor location register, i.e. that the previous visitor location register VLp supports the proposed method. The address of the previous visitor location register VLp can alternatively be obtained from a location area identifier in location update request 22.

The present visitor location register VLn sends a request 25 to the previous visitor location register VLp to send subscriber data. Parameters from the subscriber record are sent in one or several reply messages 26 which are preferably confirmed each by the present VLn. Optionally, the messages 26 also comprise a list of parameters absent in an incomplete subscriber record or replacement parameters. Replacement parameters can be determined by the previous visitor location register VLp if a confirmation indicates that a service is not supported by the present visitor location register VLn and a different service can achieve the same or similar results. The previous visitor location register VLp preferably deletes the subscriber record after a corresponding message 27 is received from the present visitor location register VLn. If the present visitor location register VLn receives a list of absent parameters and supports services for which parameters are missing, it sends a further request 28 for the parameters to the home location register HL. The missing parameters are then transmitted by the home location register HL in a message 29.

A location update message 23 is also sent for an initial location update of subscriber equipment. An initial location update is any location update of the subscriber equipment for which no subscriber record exists in a previous visitor location register or for which a previous visitor location register cannot be identified. Common examples are the first attachment of the subscriber equipment to the communication system or a subscriber whose data was deleted from the memory of any previous visitor location register because his equipment was inactive for a period of time or could not be reached by paging. In a preferable initial location update, location update message 23 comprises an indicator whether the initial visitor location register supports the proposed method and a corresponding parameter is stored in the subscriber record. In this way, the home location register can check for a subsequent location update whether the initial visitor location register is capable to provide subscriber data to a further visitor location register. If a location update message 23 is received for an initial location update, the home location register stores the identification of the present visitor location register VLp and provides it with parameters from the subscriber record in a message 4 followed by a confirmation message 5 for the location update as described with respect to figure 1.

The depicted messages are generally amended by further acknowledgement messages which are omitted in the above description for simplification. They acknowledge the successful reception of the depicted messages to allow retransmissions if necessary. Especially, the reception of every message 4, 26, 29 with subscriber data is generally confirmed by the present visitor location register VLn to the home location register HL or the previous visitor location register VLp, respectively.

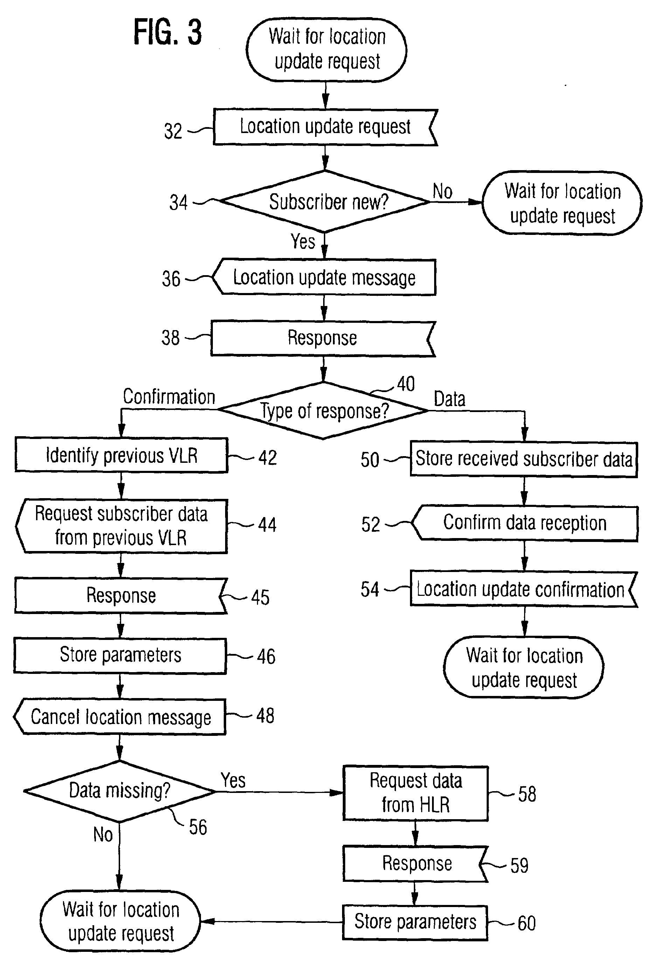

In a visitor location register according to the invention, a location update is preferably performed as shown in figure 3. The visitor location register is generally in a waiting state in which a location update procedure can be started and which is again entered after the procedure is ended. In a first step, the visitor location register receives a location update request 32 from subscriber equipment which has detected that it has entered a location area served by the visitor location register. The visitor location register performs a first check 34 whether the subscriber is already registered in the memory. If he is already registered, e.g. if the location update request was sent when the subscriber equipment commuted between location areas served by the same visitor location register, a location update to the home location register is not necessary and the process is ended.

Else a location update message 36 indicating the subscriber and the identity of the visitor location register is sent to the home location register. In the location update message 36, the visitor location register includes also an indicator that it is adapted to exchange subscriber data with further visitor location registers. When receiving the location update message 36, an advantageous home location register checks the indicator and the capabilities of the previous visitor location register which are preferably stored in the subscriber record. The home location register selects the type of the response according to the capabilities of the visitor location registers. Correspondingly, the type of the received response 38 is determined in check 40. In contrast to the state of the art, the proposed visitor location register therefore accepts different types of responses received in reply to a location update request 32.

If both the previous visitor location register and the present visitor location register are capable to exchange subscriber data with each other, the response 38 is preferably a confirmation of the location update by the home location register which ends the messaging sequence with the home location register. The confirmation comprises the identity of the previous visitor location register which is determined from the confirmation in step 42. Subsequently, a message 44 is sent to the previous visitor location register to request the transfer of the subscriber data.

In response 45, subscriber data is received with one or several messages from the previous visitor location register. The data is stored in procedure 46. It is possible that response 45 includes lists of absent and replacement parameters which are also stored. Storing procedure 46 can include a check whether received parameters correspond to unknown services. The services can be reported to the previous visitor location register which can then amend response 45 with parameters for a replacement of unknown services. Preferably, a message 48 is sent to the previous visitor location register to delete the subscriber record. After reception of the acknowledgement for the cancel location message 48, the process can optionally be ended.

If the previous visitor location register or the present visitor location register is not adapted to exchange subscriber data with each other or if a previous visitor location register cannot be identified, the response 38 is preferably a message comprising data from the subscriber record, e.g. a MAP message "Insert Subscriber Data" which can be followed by further messages with subscriber data. The received subscriber data is stored in procedure 50 and a confirmation 52 of every message with subscriber parameters is sent to the home location register. After the reception of a confirmation 54 of the location update from the home location register, the process is ended.

It is possible that different location registers store different parameters for the same subscriber, e.g. if visitor location registers support different services or differ in the way in which parameters of data sets are stored. Especially, a visitor location register may not store all parameters sent by a previous visitor location register or a home location register. Therefore, preferable storing procedures 46, 50 comprise a check if parameters are discarded and a corresponding list is stored in the visitor location register or transmitted to the home location register. This information can then be transmitted with a response 38 or a response 45 in a subsequent location update procedure to a further visitor location register.

A preferable visitor location register performs a check 56 whether a subscriber record received from a previous visitor location register contains all parameters stored in the home location register or at least all parameters being necessary to process connections for the subscriber and whether original values for replacement or replaced parameters can be used. Check 56 is preferably based upon lists of absent parameters and replacement parameters which are provided by the previous visitor location register. Else the subscriber data received can be examined. The parameters which are necessary vary according to the capabilities of the visitor location register and the control nodes served by it. Therefore, a preferable check 56 comprises a selection which parameters are requested, e.g. only missing parameters which are both absent and necessary and the original values of replacement parameters which were used by a previous visitor location register while the present visitor location register supports the corresponding service. It is proposed that a list of replacement parameters identifies also the relations to the replaced services, i.e. which service is replaced by which replacement service. This enables the present visitor location register to request only parameters for those services which are supported and were replaced as well as the original parameters of the replacement services from the subscriber record in the HLR.

According to a corresponding list in request 58, the home location register sends with the response 59 for example a complete subscriber record, all absent and replaced parameters or only missing parameters. It is proposed that request 58 initiates a new messaging sequence which is independent of the messaging sequence initiated by location update request 32 and ended by the confirmation in response 38. Preferably, response 59 is a confirmation message for the request 58, especially if the number of requested parameters is small so that they can be included in a single message. Parameters received in response 59 are stored in procedure 60. If the visitor location register stores a list of absent parameters, the list is also updated in procedure 60.

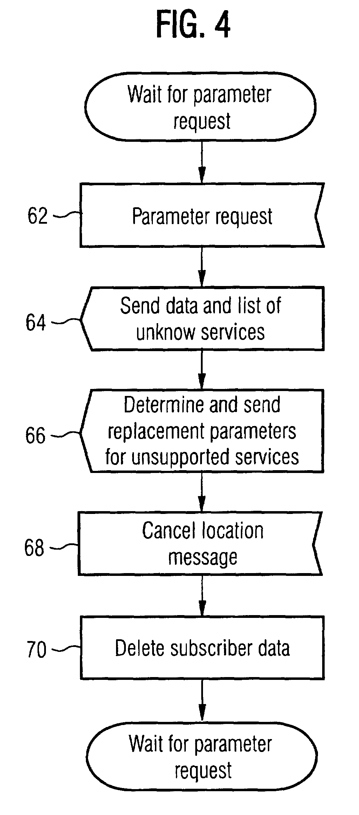

Fig. 4 shows a procedure that is executed in a previous visitor location register for providing parameters to the present visitor location register. At the begin of the procedure and after it is ended, the previous visitor location register is in a waiting state in which it can receive a request 62 to provide data for a subscriber which initiates the procedure. In a next step 64, the data stored for the subscriber are sent in one or several messages to the present visitor location register. Unless the visitor location register stores all parameters from a subscriber record and transmits them, a list of absent parameters corresponding to services which are not supported is preferably also sent in step 64 to the present visitor location register. Preferably, a confirmation for the reception of every message is checked in step 64 to allow retransmissions if necessary. If a confirmation indicates that a service is not supported by the present visitor location register, optionally a procedure 66 is initiated wherein replacement parameters for the unsupported services are determined and sent to the present visitor location register.

Upon reception of a cancel location message 68 from the present VLR, the subscriber record is deleted in step 70 and the procedure is ended, generally without a confirmation of cancel location message 68. Optionally, message 68 and step 70 are omitted if the previous VLR comprises a database management unit which ensures sufficient free memory capacity for location update procedures.

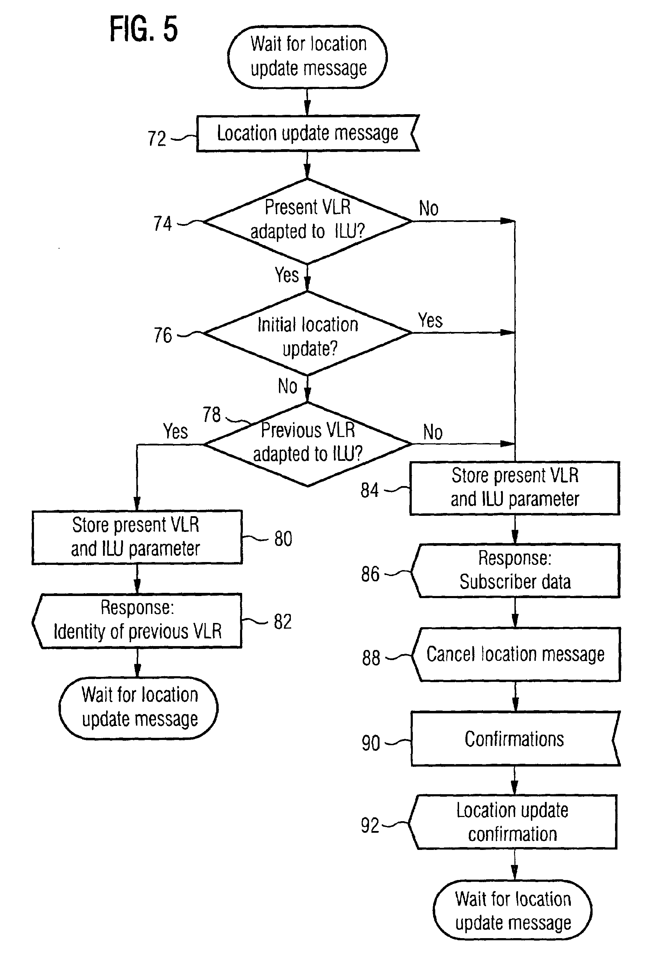

A home location register is generally in a waiting state in which a location update procedure can be started and which is entered again after the procedure is ended. The location update procedure depicted in figure 5 starts when the home location register receives a location update message 72 from the present visitor location register of a subscriber. In a first check 74, the home location register checks whether the present visitor location register which sent message 72 is adapted to the improved location update (ILU) according to the proposed method. Preferably, the corresponding information is supplied by the present visitor location register in the location update message 72. In a further check 76, the home location register examines whether a previous visitor location register can be identified. Then, a third check 78 is performed whether the previous visitor location register of the subscriber is capable of an improved location update, i.e. to provide subscriber data to the present visitor location register. Regardless of the results of the checks 74 - 78, the address of the present visitor location register and a parameter indicating whether it is capable of an improved location update is stored in storing procedures 80, 84. The sequence of the checks 74, 78 and the storing procedures 80, 84 could be changed.

If the results of the checks 74 - 78 indicate that a previous VLR can be identified and both the previous and the present VLR are adapted to the proposed method, the home location register sends an identification of the previous VLR to the present one in a response 82. It is proposed that response 82 confirms the location update to the present VLR and the process is ended, preferably after reception of an acknowledgement of response 82 from the VLR.

For an initial location update or if any VLR is not adapted to the proposed method, the home location register proceeds with the messages as used in a customary location update procedure in the state of the art. In response 86, one or several messages comprising subscriber data are sent to the present visitor location register in reply to the location update message 72. Furthermore, a cancel location message 88 with a command to delete the record of the subscriber is sent to the previous visitor location register if it can be identified, e.g. if it is not an initial location update. It is possible that step for sending cancel location message 88 is preceded by further decisions, e.g. whether the message 88 can be omitted because the previous visitor location register has a database management as described in 3G Technical Specification 23.116. After reception of the confirmations 90 for the messages in response 86 and a confirmation 92 of the location update to the present visitor location register, the process is ended.

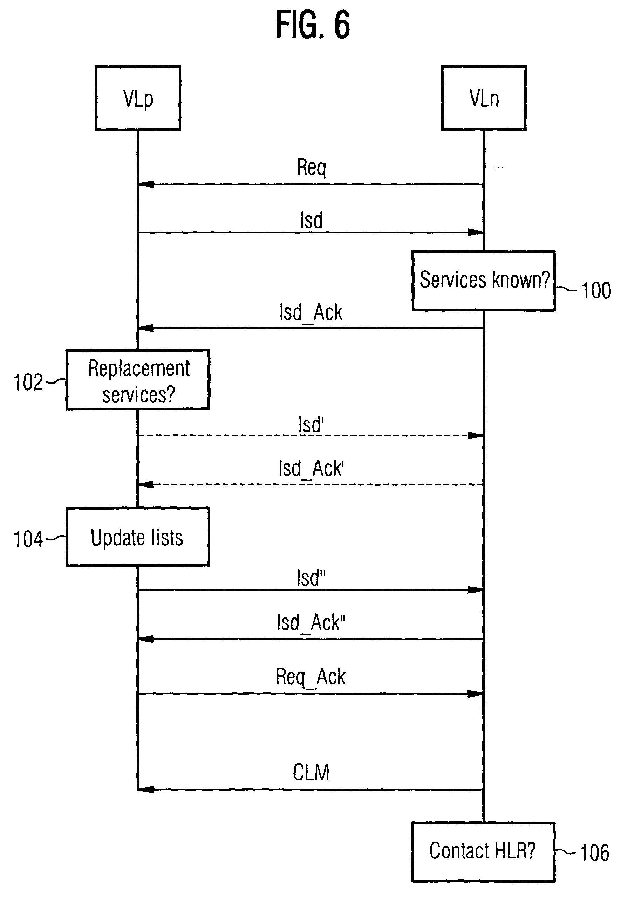

In figure 6, a messaging sequence for transferring subscriber data between two visitor location registers is shown. The messaging sequence is initiated with a request Req for subscriber data from the present visitor location register VLn to the previous visitor location register VLp. In response to request Req, one or several messages Isd are sent from the previous visitor location register VLp to the present visitor location register VLn. The messages Isd comprise subscriber data for the present visitor location register VLn. For this purpose, a message corresponding to the existing MAP message "Insert subscriber data" but sent between visitor location registers is suitable.

The present visitor location register VLn performs a check 100 whether received parameters correspond to unknown services. Check 100 is also performed if the present visitor location register VLn stores all parameters received. A list of the unknown services is then reported in an acknowledgement Isd_Ack to the previous visitor location register VLp, optionally in more than one acknowledgement Isd_Ack if more than one message Isd was received. For any service reported as unknown, the previous visitor location register VLp performs a check 102 whether a replacement service is defined for the unknown service. If this is the case, the previous visitor location register VLp determines parameters for the replacement service and sends a further message Isd' with the determined parameters which is acknowledged with an acknowledgement Isd_Ack'. Preferably, a parameter in the message Isd' indicates that the included parameters correspond to a replacement service.

An update 104 of lists of unknown and replacement services is performed in the previous visitor location register VLp according to the acknowledgements Isd_Ack, Isd_Ack'. The updated lists are then transmitted to the present visitor location register VLn in a message Isd". The list of unknown services stored in the previous visitor location register VLp can alternatively be transmitted without an update at any time during the messaging sequence with a message Isd, Isd', Isd" and then be updated by the present visitor location register VLn according to the result of check 100. The list of replacement services preferably comprises an information which service is replaced by which replacement service.

It is advantageous to use the same message format for the messages Isd, Isd', Isd". After an acknowledgement Isd_Ack" for the message Isd" is received by the previous visitor location register VLp, the messaging sequence between the visitor location registers VLp, VLn is ended with an acknowledgement Req_Ack for the request Req. In addition, generally a cancel location message CLM is sent to the previous visitor location register VLp that the transmitted subscriber data can be deleted. According to the updated lists of unknown and replacement services, the present visitor location register VLn performs a decision 106, whether the home location register of the subscriber needs to be contacted for absent or replaced parameters of the subscriber record.

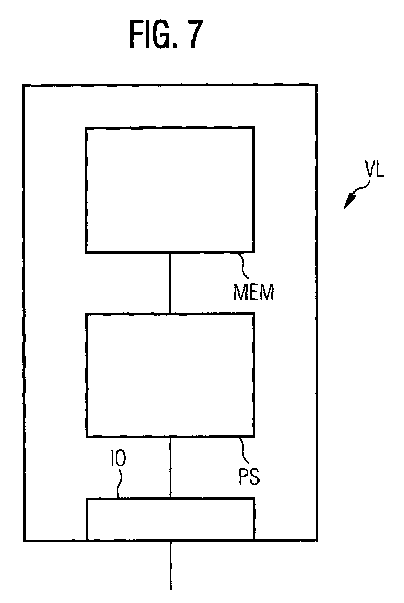

Figure 7 depicts a location register LR for a communication system, the location register LR comprising a memory MEM, a processing system PS and an interface IO for the input and output of data or messages. The memory MEM stores subscriber related parameters. The processing system PS can access and manage the contents of the memory MEM and processes messages or parameters which are sent or received via the interface IO. Procedures performed in the location register LR are preferably embodied as function units in the processing system. Preferably, the units are implemented as software units which are executed in the processing system PS. Depending on the contents of the memory MEM and the units executed in the processing system PS, the location register can be either a VLR or an HLR.

The above embodiments admirably achieve the objects of the invention. However, it will be appreciated that departures can be made by those skilled in the art without departing from the scope of the invention which is limited only by the claims. A skilled person is aware that the described dialogues and messages can be amended by additional messages, especially acknowledgements, or that messages may be split up in several partial messages.

## Claims

1. Method for the location update of a subscriber in a mobile communication system with a home location register which comprises a record for the subscriber and an identification of a visitor location register serving said subscriber, wherein visitor location registers serve a subscriber according to the present location of equipment attributed to the subscriber and store parameters from the record for the subscriber served and wherein parameters from the subscriber records can be copied between different location registers, the method comprising the following steps:
a present visitor location register (VLn) detects the presence of subscriber equipment (SE) requiring service,
the present visitor location register (VLn) sends a location update message (23) for the subscriber to the home location register (HL),
the present visitor location register (VLn) is provided with an identification of a previous visitor location register (VLp) of the subscriber,
the present visitor location register (VLn) requests subscriber data from the previous visitor location register (VLp)
and the previous visitor location register (VLp) sends subscriber data to the present visitor location register (VLn).

2. Method according to claim 1, wherein the home location register (HL) sends parameters from the subscriber record to the present visitor location register (VLn) if the present visitor location register (VLn) is not adapted to request subscriber data from the previous visitor location register (VLp) or if the previous visitor location register (VLp) is not adapted to transmit subscriber data to the present visitor location register (VLn).

3. Method according to claim 1 or 2, wherein the home location register (HL) provides the identification of the previous visitor location register (VLp).

4. Method according to claim 3, wherein the identification is included in a confirmation (24) of the location update procedure by the home location register (HL).

5. Method according to any preceding claim, wherein the previous visitor location register (VLp) deletes subscriber data after sending it to the present visitor location register (VLn).

6. Method according to claim 5, wherein the present visitor location register (VLn) sends a message (27) to the previous visitor location register (VLp) to delete subscriber data.

7. Method according to any preceding claim, wherein a visitor location register sends an indicator to the home location register (HL) that it is adapted to provide subscriber data to a further visitor location register and/or request subscriber data from a previous visitor location register (VLp).

8. Method according to claim 7, wherein the indicator is included in the location update message (23).

9. Method according to any preceding claim, wherein the present visitor location register (VLn) stores parameters corresponding to services which are not supported by the present visitor location register (VLn).

10. Method according to any preceding claim, wherein the present visitor location register (VLn) rejects parameters from the received subscriber data, stores a list of the rejected parameters and transmits the list in reply to a request (25) for subscriber data by a further visitor location register.

11. Method according to any preceding claim, wherein the present visitor location register (VLn) checks the contents of received subscriber data, reports unsupported services to the previous visitor location register (VLp) and wherein the previous visitor location register (VLp) determines and transmits parameters for the replacement of the unsupported services.

12. Method according to any preceding claim, wherein the present visitor location register (VLn) is provided with an indication that subscriber data is incomplete or corrupted and requests parameters from the home location register (HL).

13. Method according claim 12, wherein the present visitor location register (VLn) selects parameters which are requested from the home location register (HL).

14. Visitor location register for a mobile communication system with a memory (MEM) for storing subscriber data, a processing system (PS) and interfaces (IO) to receive messages from subscriber equipment (SE) and to exchange messages with a further visitor location register and with a home location register (HL) comprising a subscriber record attributed to the subscriber equipment (SE), wherein parameters from the subscriber record can be copied by messages and wherein the processing system (PS) detects the presence of a subscriber equipment (SE) from a location update request (22), sends a location update message (23) for the subscriber to the home location register (HL) and stores parameters from the subscriber record in the memory (MEM),
**characterized in that**
the processing system (PS) obtains an identification of a previous visitor location register (VLp) of the subscriber,
the processing system (PS) sends a request (25) for subscriber data to the previous visitor location register (VLp)
and the processing system (PS) stores subscriber data received from the previous visitor location register (VLp).

15. Visitor location register according to claim 14, wherein the processing system (PS) obtains the identification of the previous visitor location register (VLp) from a message by the home location register (HL).

16. Visitor location register according to claim 14 or 15, wherein the processing system (PS) sends a message (27) to the previous visitor location register (VLp) to delete subscriber data.

17. Visitor location register according to any of the claims 14 to 16, wherein the processing system (PS) sends an indicator to the home location register (HL) that it is adapted to provide subscriber data to a further visitor location register and/or request subscriber data from a previous visitor location register (VLp).

18. Visitor location register according to any of the claims 14 to 17, wherein the processing system (PS) checks the contents of received subscriber data, reports unsupported services to the previous visitor location register (VLp) and waits for replacement parameters for the reported services.

19. Visitor location register according to any of the claims 14 to 18, wherein the processing system (PS) rejects parameters from the received subscriber data, stores a list of the rejected parameters and transmits the list in reply to a request (25) for subscriber data by a further visitor location register.

20. Visitor location register according to any of the claims 14 to 19, wherein the processing system (PS) evaluates an indication that subscriber data is incomplete or unreliable and requests parameters from the subscriber record from the home location register (HL).

21. Visitor location register according to claim 20, wherein the processing system (PS) selects parameters which are requested from the home location register (HL).

22. Visitor location register according to any of the claims 14 to 21, wherein the processing system (PS) stores parameters corresponding to services which are not supported.

23. Home location register for a mobile communication system with a memory (MEM) for storing subscriber records and for storing an identification of a visitor location register serving a subscriber, a processing system (PS) and an interface (IO) to exchange messages with visitor location registers, wherein the processing system (PS) identifies the visitor location register serving the subscriber from a location update message (23) and stores the identity,
**characterized in that**
the processing system (PS) checks whether both a previous serving visitor location register (VLp) of the subscriber and the present visitor location register (VLn) which sent the location update message (23) are adapted to exchange subscriber data with each other
and the processing system (PS) sends an identification of the previous visitor location register (VLp) to the present visitor location register (VLn) and/or an indicator that subscriber data can be obtained from the previous visitor location register (VLp) if both visitor location registers are adapted to exchange subscriber data and else sends subscriber data to the present visitor location register (VLn).

24. Home location register according to claim 23, wherein the processing system (PS) sends the identification and/or the indicator in a confirmation of the location update message (23).

25. Home location register according to claim 23 or 24, wherein the processing system (PS) checks the location update message (23) for a further indicator whether the visitor location register sending the message is adapted to exchange subscriber data with a visitor location register.

26. Home location register according to any of the claims 23 to 25, wherein the home location register (HL) stores a parameter indicating whether a visitor location register can exchange subscriber data with a further visitor location register.

27. Program unit on a data carrier or loadable into a visitor location register for a mobile communication system with a processing system (PS) for executing the program unit, a memory (MEM) and interfaces (IO) to receive messages from subscriber equipment (SE) and to exchange messages with a further visitor location register and with a home location register (HL) comprising a subscriber record attributed to the subscriber equipment (SE), wherein the program unit comprises code to detect the presence of a subscriber equipment (SE), to initiate a location update message for the subscriber to the home location register (HL) and to store received subscriber data in the memory (MEM),
**characterized in that**
the program unit obtains an identification of a previous visitor location register (VLp) of the subscriber, initiates a request (25) for subscriber data to the previous visitor location register (VLp) and stores subscriber data received from the previous visitor location register (VLp).

28. Program unit on a data carrier or loadable into a home location register for a mobile communication system with a memory (MEM) for storing subscriber records and for storing an identification of a visitor location register serving a subscriber, a processing system (PS) for executing the program unit and an interface (IO) to exchange messages with visitor location registers, wherein the program unit comprises code to identify the visitor location register serving said subscriber from a location update message and to store the identity,
**characterized in that**
the program unit checks whether both the previous serving visitor location register of the subscriber and the visitor location register which sent the location update message (23) are adapted to exchange subscriber data with a visitor location register
and the program unit initiates the transmission of an identification of the previous visitor location register (VLp) to the present visitor location register (VLn) and/or an indicator that subscriber data can be obtained from the previous visitor location register (VLp) if both visitor location registers are adapted to exchange subscriber data and else initiates the transmission of subscriber data to the present visitor location register (VLn).

29. Program unit according to claim 27 or 28 wherein the code is adapted to perform at least one step of a method according to any of the claims 1 to 13.
